(19) **Europäisches Patentamt / European Patent Office / Office européen des brevets**

(11) **EP 4 195 167 B1**

(12) # EUROPEAN PATENT SPECIFICATION

(45) Date of publication and mention
of the grant of the patent:
**15.04.2026 Bulletin 2026/16**

(21) Application number: **22212932.2**

(22) Date of filing: **12.12.2022**

(51) International Patent Classification (IPC):
**G06V 20/52** *(2022.01)*   **G06V 10/82** *(2022.01)*

(52) Cooperative Patent Classification (CPC):
**G06V 10/82; G06V 20/52**

---

(54) **SYSTEM AND METHOD FOR ESTIMATING A QUANTITY OF A PRODUCE IN A TRAY**

SYSTEM UND VERFAHREN ZUR SCHÄTZUNG EINER MENGE EINES PRODUKTS IN EINEM TABLETT

SYSTÈME ET PROCÉDÉ D'ESTIMATION D'UNE QUANTITÉ D'UN PRODUIT DANS UN PLATEAU

---

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.12.2021 US 202163288295 P**

(43) Date of publication of application:
**14.06.2023 Bulletin 2023/24**

(73) Proprietor: **Shelfie Pty Ltd.
Manly, NSW 2095 (AU)**

(72) Inventors:
- **SEENIVASAGAN, Ramasamy
Madurai 625701 (IN)**
- **KOLIYAT, Vinuraj
Toongabbie 2146 (AU)**
- **SUBBAIYAN, Sudarshan
Mettupalayam 641104 (IN)**

- **MATHESWARAN, Sounder
Erode 638501 (IN)**
- **BALASUBRAMANIAM, Abirami
Coimbatore 642109 (IN)**

(74) Representative: **McKinnon, Alistair James
WP Thompson
44 Southampton Buildings
London WC2A 1AP (GB)**

(56) References cited:
**US-A1- 2021 027 485**

- **CRACIUNESCU MIHAI ET AL: "Determining on-shelf availability based on RGB and ToF depth cameras", 2021 23RD INTERNATIONAL CONFERENCE ON CONTROL SYSTEMS AND COMPUTER SCIENCE (CSCS), IEEE, 26 May 2021 (2021-05-26), pages 243 - 248, XP033945959, DOI: 10.1109/CSCS52396.2021.00047**

**Description**

## TECHNICAL FIELD

The present disclosure generally relates object detection and image processing, and more particularly to a system and method for product quantity detection using advanced image processing and deep learning.

## BACKGROUND

Retail stores offer varieties of products for sale to the shoppers who visit the retail store. Often such products, which may include but not limited to groceries, beauty products, dairy products, fruits and vegetables, etc., are arranged on shelves or trays for easy access by the shoppers. When the shoppers purchase the products, the retailers must restock the products to ensure products availability for the next shoppers and also to meet the marketing agreement with the suppliers of the products. Such a process requires continuous or frequent monitoring by employees of the retail store and the process is time consuming, requires more manpower, error prone and hence inefficient.

With the advancement in communication and technology, many companies developed various products and provided various solutions which include sensor-based product detection, in which conductive contact sensors, inductance sensors, weight sensors, optical sensors, etc., are used to detect the out-of-shelf products in retail shelves. Other solutions include the use of cameras to capture the images of the shelves, and the captured images are processed and compared with the planogram to detect the missing products. Such a solution requires proper arrangement of the products according to the planogram. Further, such a solution may not be applicable for products such as fruits and vegetables, dairy products, unpacked or loosely packed products, products having irregular shapes and colours, etc. Few other solutions include detection of product quantity by image processing. However, such a solution needs higher resolution image capturing devices, the process is computationally intensive and hence the application will become bulky - both in terms of software and hardware.

"Determining on-shelf availability based on RGB and ToF depth cameras", 2021 23RD INTERNATIONAL CONFERENCE ON CONTROL SYSTEMS AND COMPUTER SCIENCE (CSCS), IEEE, 26 May 2021 (2021-05-26), pages 243-248, XP033945959, describes a method of determining on-shelf availability based on RGB and ToF depth cameras.

US 2021/027485 A1 describes a status monitoring method using machine learning and machine vision technology.

## BRIEF SUMMARY

According to an aspect of the present invention, there is provided a method for estimating a quantity of a produce in a tray according to any of claims 1 to 6.

According to an aspect of the present invention, there is provided a system for estimating a quantity of a produce in a tray according to claim 7.

This summary is provided to introduce a selection of concepts in a simple manner that is further described in the detailed description of the disclosure. This summary is not intended to identify key or essential inventive concepts of the subject matter nor is it intended for determining the scope of the disclosure.

To overcome at least one of the problems mentioned above, there exists a need for a system and method estimating a quantity of produce in a tray.

The present disclosure discloses a system and method for estimating a quantity of a produce in a tray using deep learning models. The method comprises, receiving an image from a camera, the image having an image of the tray, identifying the image of the tray in the received image using a first deep learning model, wherein the first deep learning model is trained using a plurality of images of trays of different colours, textures, sizes and shapes, wherein the plurality of images of the trays are of trays not containing produce, estimating, by the processor, a total area of the tray, identifying one or more areas in the image of the tray in which the top surface of the bottom of the tray is exposed, wherein the identifying the top surface of the bottom of the tray is by using a second deep learning model trained using the plurality of images of areas exposed in trays having different colours, and textures, estimating an area of the identified top surface of the bottom of the tray exposed, subtracting by the processor the estimated area of the identified top surface of the bottom of the tray exposed from the total area of the tray to obtain an area of the tray covered by the produce, and estimating, by the gap percentage calculation module, the quantity of the produce in the tray as a ratio of the area of the tray covered by the produce and the total area of the tray.

To further clarify advantages and features of the present disclosure, a more particular description of the disclosure will be rendered by reference to specific embodiments thereof, which is illustrated in the appended figures. It is to be appreciated that these figures depict only typical embodiments of the disclosure and are therefore not to be considered limiting of its scope. The disclosure will be described and explained with additional specificity and detail with the accompanying figures.

## BRIEF DESCRIPTION OF THE FIGURES

The disclosed method and system will be described and explained with additional specificity and detail with the accompanying figures in which:

Figure 1 illustrates an exemplary system for estimating a quantity of a produce in accordance with an embodiment of the present disclosure;

Figure 2 is a block diagram of the management server 105 in accordance with an embodiment of the present disclosure;

Figure 3A shows an image with obstructions. As shown, the trays are arranged on shelves and camera is positioned to capture the image of the shelves having one or more trays;

Figure 3B shows five categories of the tray in accordance with an embodiment of the present disclosure;

Figure 4A is an exemplary image illustrating tray identification process in accordance with an embodiment of the present disclosure;

Figure 4B shows one tray image which is identified by the tray image identification module;

Figure 5 shows an exemplary image comprising multiple trays arranged on a shelf; and

Figure 6 shows an exemplary process of training and evaluating the deep learning model in accordance with an embodiment of the present disclosure.

Further, persons skilled in the art to which this disclosure belongs will appreciate that elements in the figures are illustrated for simplicity and may not have been necessarily drawn to scale. Furthermore, in terms of the construction of the joining ring and one or more components of the bearing assembly may have been represented in the figures by conventional symbols, and the figures may show only those specific details that are pertinent to understanding the embodiments of the present disclosure so as not to obscure the figures with details that will be readily apparent to those of ordinary skill in the art having benefit of the description herein.

## DETAILED DESCRIPTION

For the purpose of promoting an understanding of the principles of the disclosure, reference will now be made to the embodiment illustrated in the figures and specific language will be used to describe them.
It will be understood by those skilled in the art that the foregoing general description and the following detailed description are exemplary and explanatory of the disclosure and are not intended to be restrictive thereof.
In the present disclosure, relational terms such as first and second, and the like, may be used to distinguish one entity from the other, without necessarily implying any actual relationship or order between such entities.
The terms "comprises", "comprising", or any other variations thereof, are intended to cover a non-exclusive inclusion, such that a process or method that comprises a list of steps does not include only those steps but may include other steps not expressly listed or inherent to such a process or a method. Similarly, one or more elements or structures or components preceded by "comprises... a" does not, without more constraints, preclude the existence of other elements, other structures, other components, additional devices, additional elements, additional structures, or additional components. Appearances of the phrase "in an embodiment", "in another embodiment" and similar language throughout this specification may, but do not necessarily, all refer to the same embodiment.
Unless otherwise defined, all technical and scientific terms used herein have the same meaning as commonly understood by one of ordinary skill in the art to which this disclosure belongs. The components, methods, and examples provided herein are illustrative only and not intended to be limiting.
Embodiments of the present disclosure will be described below in detail with reference to the accompanying figures.
Embodiments of the present disclosure disclose a system and method for estimating a quantity of the produce in tray using advanced images processing and deep learning technologies. Particularly, embodiments of the present disclosure disclose a system and method for detecting empty areas in a tray containing a produce and hence for estimating the quantity of the produce, wherein the produce may include but not limited to fruits and vegetables, dairy products, unpacked or loosely packed products, products having irregular shapes and sizes, products of different colours, etc. Such produces are generally referred to as perishable products in the present disclosure. It is to be noted that the functions of the system disclosed in the present disclosure are described referring to perishable products (fruits and vegetables). However, the system and method can be implemented for detecting empty areas in a tray containing any products such as packed products, groceries, healthcare products, footwears, cloths, etc., and hence for detecting quantity of the product in the tray. The term empty areas or gap(s) as described herein refers to one or more areas in the image of the tray in which the top surface of the bottom of the tray is exposed. In other words, the empty area is an area not occupied by the produce.

The system receives an image having an image of the tray, identifies the image of the tray in the received image, using a first deep learning model, wherein the first deep learning model is trained using a plurality of images of trays of different colours, textures, sizes, and shapes, wherein the plurality of images of the trays are of trays not containing produce. For identifying empty areas in the tray, the system estimates a total area of the tray, and identifies one or more areas in the image of the tray in which the top surface of the bottom of the tray is exposed, wherein the identifying the top surface of the bottom of the tray is by using a second deep learning model trained using the plurality of images of areas exposed in trays having different colours, and textures. Then the system estimates an area of the identified top surface of the bottom of the tray exposed, subtracts the estimated area of the identified top surface of the bottom of the tray exposed from the total area of the tray to obtain an area of the tray covered by the produce, and estimates the quantity of the produce in the tray as a ratio of the area of the tray covered by the produce and the total area of the tray.

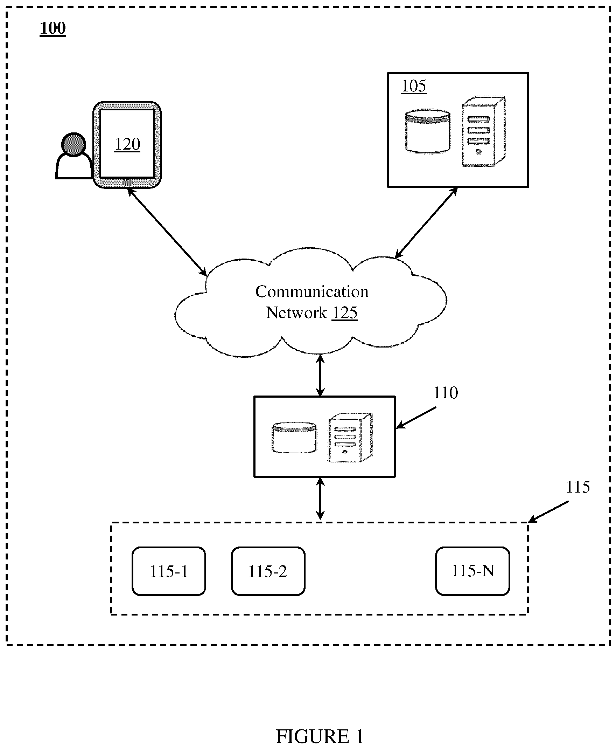

Figure 1 illustrates an exemplary system for estimating a quantity of a produce in accordance with an embodiment of the present disclosure. As shown, the system 100 comprises a management server 105, a store server 110, a plurality of cameras (115-1 to 115-N), one or more user devices 120 and a communication network 125, wherein the communication network 125 enables communication between various said devices of the system 100. It is to be noted that the store server 110 and the plurality of cameras 115 are deployed in a retail store and the management server 105 is communicatively connected to the one or more such store servers for remotely managing the operation of the connected store servers 110 and the deployed cameras (115-1 to 115-N). On the other hand, operations of the system may be managed locally using the store server 110, and hence the operations of the two servers 105 and 110 are substantially similar in nature.

The management server 105 and the store server 110 may include, for example, a computer server or a network of computers or a virtual server which provides functionalities or services for other programs or devices such as for the user device 120 and the plurality of cameras 115. Hence, the servers 105 and 110 may include one or more processors, associated processing modules, interfaces and storage devices communicatively interconnected to one another through one or more communication means for communicating information. The storage associated with the servers 105 and 110 may include volatile and non-volatile memory devices for storing information and instructions to be executed by the one or more processors and for storing temporary variables or other intermediate information during processing.

The user device 120 may be any computing device that often accompanies its users to perform various activities such as browsing, communicating emails, etc. By way of example, the user device 120 may include a smartphone, a laptop, a notebook computer, a tablet, and the like having communication capabilities. It will be appreciated by those skilled in the art that the user device 120 comprises one or more functional elements capable of communicating through the communication network 125 to receive one or more services offered by the management server 105 and the store server 110. In one embodiment of the present disclosure, a dedicated application can be installed for receiving notification from the servers 105 and 110.

The communication network 125 may be a wireless network or a wired network or a combination thereof. Wireless network may include long range wireless radio, wireless personal area network (WPAN), wireless local area network (WLAN), mobile data communications such as 3G, 4G or any other similar technologies. The communication network 125 may be implemented as one of the different types of networks, such as intranet, local area network (LAN), wide area network (WAN), the internet, and the like. The communication network 130 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like. Further, the communication network 125 may include a variety of network devices, including routers, bridges, servers, modems, computing devices, storage devices, and the like. In one implementation, the communication network 125 is the internet which enables communication between various devices of the system 100 for enabling secure data communication among the devices.

The plurality of cameras 115 may include but not limited to still cameras or video cameras or mobile cameras that can connect to the internet for sending the images to the temporary image storage devices. In one implementation, the plurality of cameras 115 are deployed opposite to the one or more trays for capturing entire image of one or more trays. Alternatively, the one or more trays may be placed on one or more shelves and the cameras are suitably placed to capture the images of the one or more trays on the one or more shelves. However, the cameras 115 may be suitably deployed anywhere in the premises to capture the image of the one or more trays to be monitored. The plurality of cameras 115 are connected to the store server 110 through wired or wireless connection to communicate the captured images for further processing by the store server 110 or the management server 105 or both. As the proposed system uses the cameras to identify the empty areas rather than identifying the product, the camera constraints are greatly reduced making low-resolution cameras sufficient for the system to get the desired results. As described, the fixed cameras can either be mounted on the roof opposite to the one or more trays or in the opposite shelf itself whichever gives the better view of the one or more trays reliably. The images can also be taken from mobile camera or a shelf scanning robot which may be used to get a quick and minimal stock quantity analysis of the one or more trays. It is to be noted that the store server 110 and the plurality of cameras 115 deployed in the retail store are identified using unique identifiers (IDs). In one implementation, the IDs are mapped with the one or more trays or the products or both. Alternatively, the one or more trays or the products that a camera is monitoring may be identified using image processing methods disclosed in the present disclosure.

As described, the plurality of cameras 115 deployed in the store are configured for continuously or frequently capturing the images of the one or more trays for monitoring and estimating the produce stock level in the one or more trays. In the present disclosure, one camera and one tray are considered for the ease of explanation. However, one or more cameras may be deployed to monitor one or more trays, or one camera may be deployed for monitoring multiple trays based on the requirement, the tray size, product types, etc. The cameras 115 deployed in the retail store captures a plurality of images of the one or more and communicates the same to the store server 110 which in turn communicates the same to the management server 105. As descried, the store server 110 can be configured to process the images for detecting out-of-shelf products or estimating the quantity of the product in a given tray. The manner which the management server 105 processes an image for detecting the out-of-shelf products or for detecting the product quantity in a tray using deep learning techniques is described further in detail below.

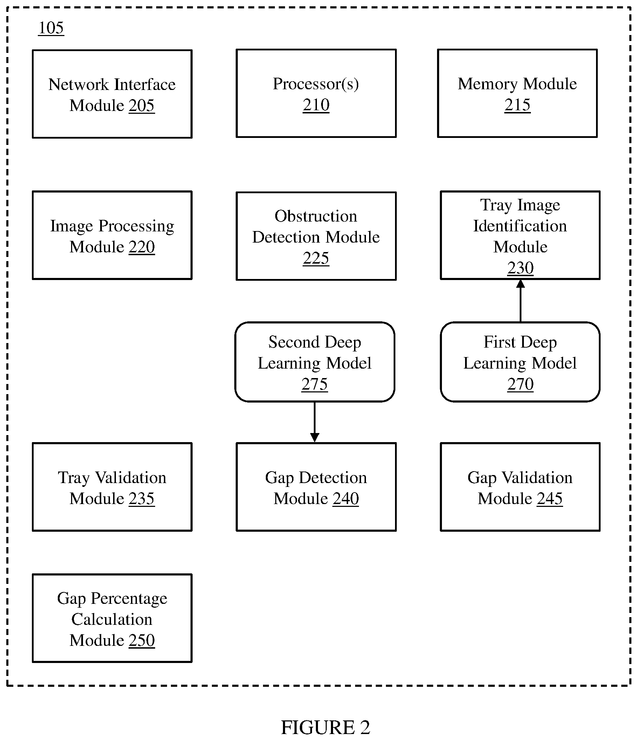

Figure 2 is a block diagram of the management server 105 in accordance with an embodiment of the present disclosure. As shown, the management server 105 comprises a network interface module 205 enabling communication with the communication network 125, a one or more processors 210, and a memory module 215 for storing temporary data during processing and for storing instructions to be executed by the one or more processors 210. In one embodiment of the present disclosure, the management server 105 further comprises an image processing module 220, obstruction detection module 225, tray identification module 230, tray validation module 235, gap detection module 240, gap validation module 245 and a gap percentage calculation module 250.

As described, the camera 115 deployed in the retail store captures an image having an image of the tray and the captured image is communicated to the management server 105 for further processing. In one embodiment of the present disclosure, on receiving the image having the image of the tray, the image processing module 220 processes the received image to remove noise and to improve the quality of the image by fixing issues related to lighting, noise, blurred or over exposed regions, etc. Further, the obstruction detection module 225 analyses the image to identify the obstructions in the received image, if any. The obstructions can be anything in between the camera and the tray, including humans, trolleys, cardboard boxes or anything hanging in the ceiling which obstructs the view of the tray which makes it difficult to identify the empty areas in the tray. In one embodiment of the present disclosure, a deep learning model is used for identifying one or more obstructions present in the image, wherein the deep learning model is trained using a plurality of images of humans, trolleys, boxes, etc. If any obstruction is identified, the image is rejected and a new image is taken for estimating the quantity of the produce in the tray. Else, the image sent for further processing. In a preferred embodiment of the present disclosure, obstructions are classified into seven classes such as humans, product trolley, customer trolley, customer basket, product boxes, closed obstruction and others. For each class, a plurality of images is labelled and used for training the deep learning model.

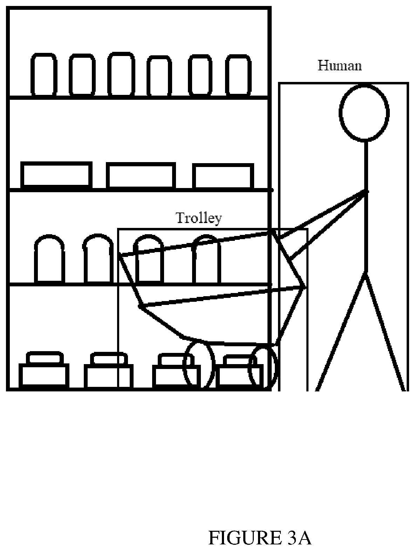

Figure 3A shows an image with obstructions. As shown, the trays are arranged on shelves and a camera is positioned to capture the image of the shelves having one or more trays. While processing the image, the humans and trolleys are identified in the image which obstructs the view of the one or more trays, so the obstruction detection module 225 rejects the image. The same image may be rejected due to privacy concerns because there are chances that the human faces are visible in the image. It is to be noted that obstruction detection module 125 is configured in a way that a client (retailer implementing the disclosed system, for example) may configure or train the deep learning model to detect the obstructions according to their need. It is to be noted that the model is trained to identify the obstructions that overlap with the tray image.

If the obstruction is not present in the received image, the image having an image of the tray is fed to the tray image identification module 230. Since the image is captured using the camera positioned in front of the tray, the image often includes images of other objects surrounding the tray. In one embodiment of the present disclosure, the tray image identification module 230 is configured for identifying the image of the tray in the received image using a first deep learning model 270. In other words, the first deep learning model 270 is trained to identify the tray in the received image having the image of the tray. In one embodiment of the first deep learning model 270 is trained using a plurality of images of trays of different colours, textures, sizes, and shapes with edges, wherein the plurality of images of the trays are of trays not containing produce. That is, a plurality of images of empty trays having different colours, textures, sizes, and shapes are used for training the first deep learning model 270. Further, the first deep learning model 270 is trained to detect the edges of the tray by training using a plurality of tray images showings edges of the trays. The product overflow occurs rarely even if it happens our system will try to approximate the fully or partially covered tray area from the nearby clearly visible tray's height and width. In one embodiment of the present disclosure, the model is also trained to detect the change in colour, shape and texture of produce try to differentiate the tray image.

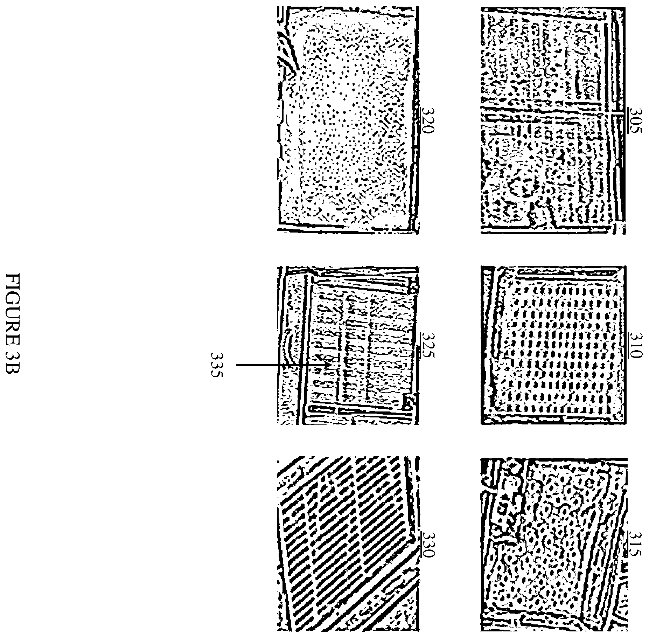

In a preferred embodiment of the present disclosure, the trays are categorized into five categories based on the background (that is, the top surface of the bottom of the tray) - white background tray, black background tray, brown background tray, green background tray and pattern tray. That is, a plurality of images (having 1920×1080 resolution, for example) of a plurality of empty trays from each category are used for training the first deep learning model 270. Further, in a preferred embodiment, the trays are labelled with a minimum bounding box size of 50 × 50 pixels and maximum bounding box size of 120 ×120 pixels, and the bounding box are rectangular or square in shape. Figure 3B shows five categories of the tray in accordance with an embodiment of the present disclosure. The reference numeral 305 shows a white background tray, the reference numeral 310 shows black background tray, the reference numeral 315 shows brown background tray, the reference numeral 320 shows green background tray and the reference numerals 325 and 330 shows pattern trays having two different patterns.

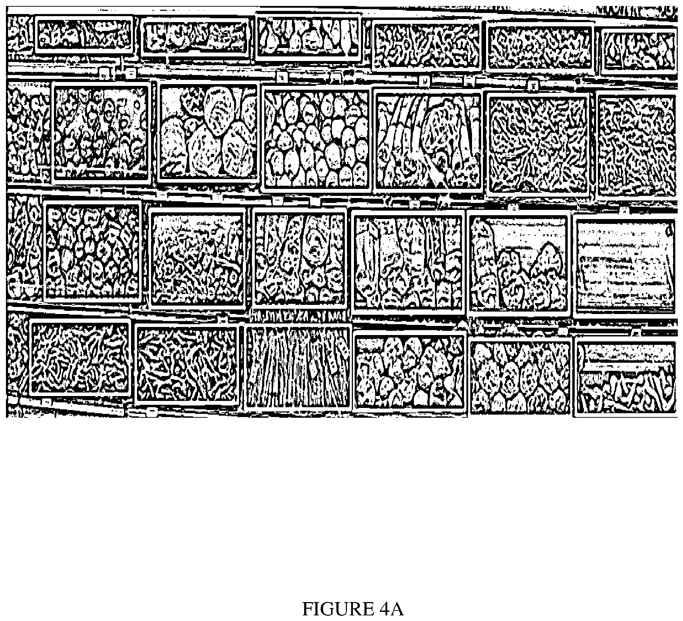

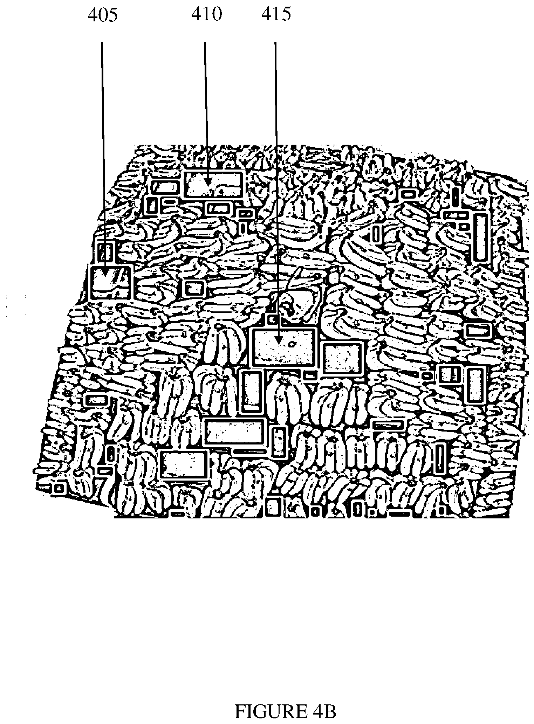

Hence, on receiving the image having the image of the tray, the tray image identification module 230 identifies the image of the tray using the first deep learning model 270. Figure 4A is an exemplary image illustrating tray identification process in accordance with an embodiment of the present disclosure. The exemplary image shown in Figure 4A comprises a plurality of trays having different products. In one embodiment, the tray image identification module 230 identifies the trays using the first deep learning model 270. The deep learning model 270 looks for the tray edges, tray size, shape, and the colours for identifying the tray. Tray region can be of different size, shape and color, and a single image may include an image of a single tray or multiple trays, as shown in Figure 4A. The tray image detection module 230 identifies all the possible tray regions in the image. Figure 4B shows one tray image which is identified by the tray image identification module 230. As described, the tray image detection module 230 uses the first deep learning model 270 for identifying the tray. An exemplary deep learning architecture include:

- 

$$\text{Number of layers} = 106 \text{ layers fully convolutional architecture}$$

- Input layer - 1
- Output layers - 3 yolo layers

Below are the exemplary training specifications:

- 

$$\text{Input size} = 416*416 \ (\text{Width * height})$$

- 

$$\text{classes} = 5 \text{ in each yolo layer}$$

- 

$$\text{filters} = (\text{classes} + 5) \times 3 \text{ in three convolution layers before each yolo layer}$$

- 

$$\text{Number of epochs} = 10000$$

- 

$$\text{Number of images for each epoch} = 64$$

EP 4 195 167 B1

- 

$$\text{anchors} = \text{contains } 9 \text{ anchors}$$

- 

$$\text{learning rate} = 0.001$$

Upon identifying the image of the tray, the tray image identification module 230 crops the image of the tray and inputs it to the gap detection module 240. In one embodiment of the present disclosure, before inputting image of the tray to the gap detection module 240, the image of the tray is validated (that is, the tray is validated) using the tray validation module 235. In one embodiment of the present disclosure, the tray validation module 235 validates the tray using the image of the tray and a a first pixel determination technique. In this technique, the tray validation module 235 determines a number of pixels occupied by the tray in the image of the tray, compares the number of pixels with a predetermined threshold value, and marks the tray as a valid tray if the number of pixels is greater than the predetermined threshold value. If the size of the tray detected is larger than a predefined tray size, such tray is marked as valid and used for further processing, else, the tray is filtered out. In a preferred embodiment, the predetermined threshold value is set as $50 \times 50$ pixels. That is, the minimum tray size should be $50 \times 50$ pixels. However, the minimum size (the predefined threshold) can be defined according to the camera placement and the type of the tray. For example, for a bakery tray, the minimum tray size may be $60 \times 60$ pixels. Further, in one embodiment of the present disclosure, the processor 210 estimates the total tray area of the tray based on a second pixel determination technique. That is, the tray validation module 235 computes a number of pixels of the tray in the image of the tray and determines the total area based on the number of pixels.

Then the cropped and validated image of the tray is inputted to the gap detection module 240. As described, empty areas or gap(s) refers to one or more areas in the image of the tray in which the top surface of the bottom of the tray is exposed, that is not covered by the product. In one embodiment of the present disclosure, the gap detection module 240 identifies the one or more areas in the image of the tray in which the top surface of the bottom of the tray is exposed, wherein the identifying the top surface of the bottom of the tray is by using a second deep learning model 275. Referring to Figure 3B, the reference numeral 335 shows a top surface of the bottom of the tray.

In one embodiment the second deep learning model 275 is trained using the plurality of images of areas exposed in trays having different colours, and textures. In one implementation, the trays are categorized into five categories based on the background (that is, the top surface of the bottom of the tray) - white background tray, black background tray, brown background tray, green background tray and pattern tray, and a plurality of images of areas exposed in trays having said colours, and textures are used to train the second deep learning model 275. For example, a sample image of a tray is taken, and sample empty areas are created by masking regions of the top surface of the bottom of the tray, and such plurality of sample images are used for training the second deep learning model 275. In one example, gap bounding boxes with a minimum size of $18 \times 18$ and maximum size of $110 \times 110$ are created and such images are used for training the second deep learning model 275. In another implementation, sample tray images are collected from the retail store trays (having empty areas) and such sample images are used for training the second deep learning model 275.

An exemplary deep learning architecture include:

- 

$$\text{Number of layers} = 106 \text{ layers fully convolutional architecture}$$

- Input layer - 1
- Output layers - 3 yolo layers

Below are the exemplary training specifications:

- 

$$\text{Input size} = 416*416 \text{ (Width * height)}$$

- 

$$\text{classes} = 5 \text{ in each yolo layer}$$

•

$$\text{filters} = (\text{classes} + 5) \times 3 \text{ in three convolution layers before each yolo layer}$$

•

$$\text{Number of epochs} = 10000$$

•

$$\text{Number of images for each epoch} = 64$$

•

$$\text{anchors} = \text{it contains 9 anchors}$$

•

$$\text{learning rate} = 0.001$$

Referring to Figure 4B, the gap detection module 240 detects one or more empty areas 405, 410 and 415 (shown three areas for example) in the tray. As can be seen, an empty area is an area in the image of the tray in which the top surface of the bottom of the tray is exposed.

Upon identifying the one or more areas in the image of the tray in which the top surface of the bottom of the tray is exposed. That is, upon identifying the one or more empty areas in the tray, the gap validation module 240 validates the one or more empty areas as valid by comparing an area of the empty areas with a predefined threshold and validates as valid of the areas is greater than the predefined threshold. In one implementation, area is computed based on the number of pixels. Alternatively, number of pixels are counted in the top surface of the bottom of the tray (empty area) and compared with a predefined threshold value for validating the empty area.

Then, the gap percentage calculation module 250 computes the gap percentage (that is, total empty area with reference to the total area of the tray) based on an area of the identified top surface of the bottom of the tray exposed and the total area of the tray. The gap percentage calculation module 250 initially estimates the area of the identified top surface of the bottom of the tray exposed based on the second pixel determination technique. That is, on identifying the one or more empty aeras in the tray, the gap percentage calculation module 250 computes the number of pixels occupied by each of the one or more empty areas. Then adds up the same to compute the total number of pixels occupied by all the empty areas of the tray which provides an estimation on the empty area in the tray. Further, the percentage calculation module 250 subtracts the estimated area of the identified top surface of the bottom of the tray exposed (empty area of the tray) from the total area of the tray (estimated by the processor 210) to obtain an area of the tray covered by the produce. In one implementation, the gap percentage calculation module 250 computes a percentage of empty area in the tray by diving the total area of the tray by the empty area in the tray. Then the computed percentage value is compared with a predefined threshold percentage value and notifies the one or more user, through the user device 120, if the computed percentage is greater than the predefined threshold percentage value. For example, if predefined threshold percentage is 40, and the computed percentage value is 45, then the gap percentage calculation module 250 communicates the same to the one or more users, indicating that the tray is 45% empty.

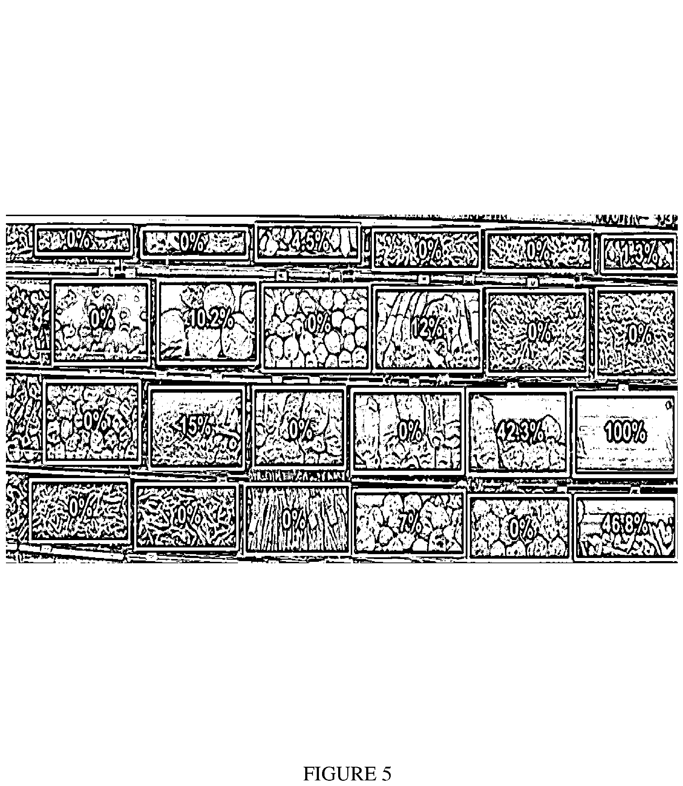

Alternatively, the gap percentage calculation module 250 is configured for estimating the quantity of the produce in the tray as a ratio of the area of the tray covered by the produce and the total area of the tray. As described, to estimate the quantity of the produce, the gap percentage calculation module 250 subtracts the estimated area of the identified top surface of the bottom of the tray exposed (empty area of the tray) from the total area of the tray (estimated by the tray validation module 235) to obtain an area of the tray covered by the produce. Then computes a percentage of area occupied by the produce by diving the total area of the tray by the area occupied by the produce. Further, the percentage is compared with a predefined threshold value and if the percentage is less than the predefined threshold value, a notification is sent to the one or more users. In one embodiment, the percentage values are augmented on a real image of the tray or multiple trays. Figure 5 shows an exemplary image comprising multiple trays arranged on a shelf. In this example, a single image comprises multiple trays and the system calculates gap percentage (percentage of empty area) of each tray, independently or at a time, and the same image is communicated to the user device 120 for fulfilment by the end user.

As described, tray image in an image received from the camera is identified using the first deep learning model and one or more areas (which is also referred to as gap(s) or top surface of the bottom of the tray exposed) are identified using the second deep learning model. In addition, obstructions are also identified using the deep learning model. In general, the way the deep learning models are built is explained below in further details.

Multiple deep learning architectures are used to train the data and get the desired result. The noise filtered or processed images are processed by ensemble of convolutional neural networks (CNN) to identify the empty areas in the tray containing the produce. CNN includes the tuning of the hyperparameters such as learning rate, batch size, maximum number of training epochs, input image size, feature maps of each convolutional layer, pool size etc.

A sample CNN architecture includes the following model parameters to train and build the model. The architecture changes depending on the need and performance. Image size 76 x 76, channel - 3, Batch size - 16, Seed - 42, Hidden layers - 12, Activation function - [relu, SoftMax].

YOLO based deep learning model parameters include Image size - 416 x 416, Batch - 64, Subdivisions - 16, channels - 3, Convolution layers - 53, Yolo layers - 3, Filter - (classes + 5) * 3, learning rate = 0.001.

Once the deep learning model is built, the model is tested and evaluated against the validation set of images. For example, validating the second deep learning model, the validation set comprises of the ground truth images of empty areas. The model that satisfies the validation threshold is used for recognizing the one or more empty areas and deployed for production.

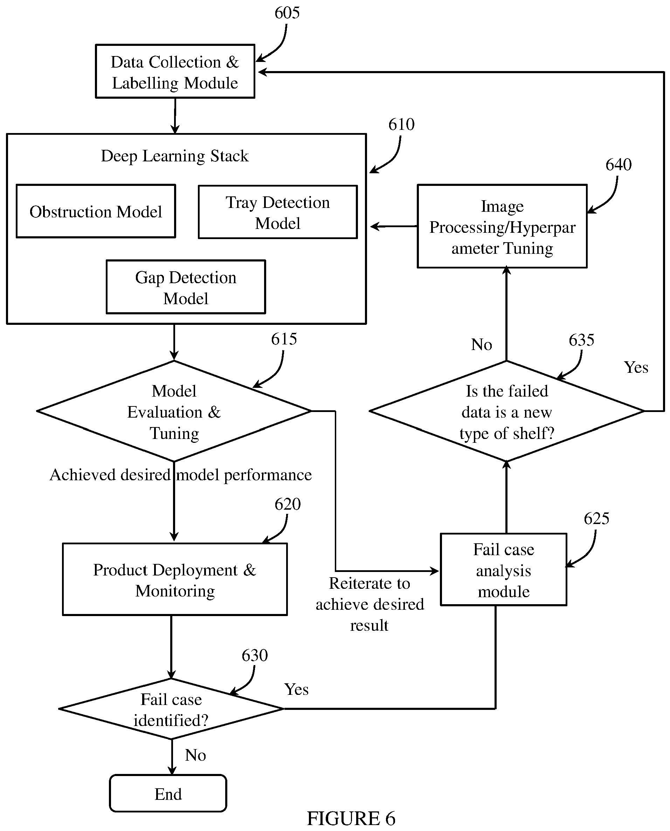

Figure 6 shows an exemplary process of training and evaluating the deep learning model in accordance with an embodiment of the present disclosure. As shown, initially, at step 605, data is collected and labelled to train the deep learning models shown in block 610. The data as described herein include images, which include images of different types of trays, images of empty areas on the trays, obstructions, etc., based on the type of the deep learning model to be generated.

At step 615, the generated models (obstruction detection model, first deep learning model (tray detection) and the second deep learning model (gap detection)) are tested to calculate the performance of the model, the model is tested against a holdout dataset. The performance metrics include the True positive, True negative, False positives and False Negatives and the inference speed. At step 620, the model which has the highest performance is deployed for production. The failure case images are sent to the failure case analysis for further investigation and training as shown at step 625.

The deployment is done in the cloud or in the edge devices depending on the need of the end users (for example, retailers). For the speed and accuracy, the model is built with a large set of data and deployed in the cloud architecture. For cost effectiveness the model is built with a limited dataset and quantized the model to deploy in the edge devices. The deployed model is monitored for a short period of time to ensure the production accuracy and improve the inference result as shown at step 630.

Further, for any fail cases in the production, the failed images are collected and sent for further investigation by the failure case analysis module 625 shown at step 625. If the failed cases are because of the new tray which are not trained previously then the data is sent to the data labelling module for further training as shown at step 635. If fail case is due to the existing data set, then the data is moved to the image processing or hyperparameter tuning module shown at step 640, where the CNN or the YOLO hyperparameters are tuned to get the desired result. Furthermore, the failed images which are already trained is sent to this module so that the module can be fixed using the image processing algorithm specifically for such kind of fail cases.

As described, the proposed method implements the deep learning technology for to estimating the gap percentage value in the trays storing the produce and hence helps the store associates to refill the products at the right time. Further, the method identifies the gap regions of the trays rather than identifying the produce.

As described, the system and method disclosed in the present disclosure enables estimation of a quantity of produce stored in a tray using advanced image processing and deep learning techniques. Further, the system provides a gap percentage value to the end user to take necessary actions towards restocking. Hence the system may be implemented for detecting out-of-shelf or estimating a quantity of produce in any retail store, the produce including but not limited to fruits and vegetables, dairy products, unpacked or loosely packed products, products having irregular shapes and colours.

While specific language has been used to describe the disclosure, any limitations arising on account of the same are not intended. As would be apparent to a person skilled in the art, various working modifications may be made to the method in order to implement the inventive concept as taught herein.

The figures and the foregoing description give examples of embodiments. Those skilled in the art will appreciate that one or more of the described elements may well be combined into a single functional element. Alternatively, certain elements may be split into multiple functional elements. Orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. Numerous variations, whether explicitly given in the specification or not, such as differences in structure, dimension, and use of material, are possible. The scope of embodiments is at least as broad as given by the following claims.

**Claims**

1.  A method for estimating a quantity of a produce in a tray, the method comprising:

    receiving, by a processor (210), an image from a camera (115), the image having an image of the tray;
    identifying the image of the tray in the received image, by a tray image identification module (230), using a first deep learning model (270), wherein the first deep learning model (270) is trained using a plurality of images of trays of different colours, textures, sizes, and shapes, wherein the plurality of images of the trays are of trays not containing produce;
    validating the tray as valid, by a tray validation module (235), using the image of the tray and a first pixel determination technique, wherein validating the tray using the image of the tray and the first pixel determination technique comprises marking the tray as a valid tray if a number of pixels occupied by the tray in the image of the tray is greater than a predetermined threshold value;
    estimating, by the processor (210), a total area of the tray;
    identifying, by a gap detection module (240), one or more areas in the image of the tray in which the top surface of the bottom of the tray is exposed, wherein the identifying the top surface of the bottom of the tray is performed by a second deep learning model (275) trained using a plurality of images of areas exposed in trays having different colours, and textures; and
    estimating, by a gap percentage calculation module (240), the quantity of the produce in the tray, wherein estimating the quantity of the produce in the tray comprises:

    estimating an area of the identified top surface of the bottom of the tray that is exposed;
    subtracting the estimated area of the identified top surface of the bottom of the tray that is exposed from the total area of the tray to obtain an area of the tray covered by the produce; and
    estimating the quantity of the produce in the tray as a percentage of the area of the tray covered by the produce and the total area of the tray.

2.  The method as claimed in claim 1, further comprising, processing, by the processor (210), the received image to remove noise and obstructions in the received image.

3.  The method as claimed in claim 1, wherein validating the tray using the image of the tray and the first pixel determination technique further comprises:

    determining the number of pixels occupied by the tray in the image of the tray; and
    comparing the number of pixels with the predetermined threshold value.

4.  The method as claimed in claim 1, wherein estimating the total area of the tray and estimating the area of the identified top surface of the bottom of the tray that is exposed is based a second pixel determination technique.

5.  The method as claimed in claim 4, wherein estimating the total area of the tray based on the second pixel determination technique comprises:

    computing the number of pixels of the tray in the image of the tray; and
    determining the total area based on the number of pixels.

6.  The method as claimed in claim 4, wherein estimating the area of the identified top surface of the bottom of the tray that is exposed based on the second pixel determination technique comprises:

    computing a number of pixels occupied by the top surface of the bottom of the tray that is exposed; and
    determining the area based on the number of pixels.

7.  A system (100) for estimating a quantity of a produce in a tray, the system (100) comprising:

    a camera (115) configured for capturing an image, the image having an image of the tray; and
    a management server (105) comprising a processor (210) and a memory module (215) storing instructions to be executed by the processor (210), the management server configured (105) for:

    receiving the image from the camera (115);

identifying the image of the tray in the received image using a first deep learning model (270), wherein the first deep learning model (270) is trained using a plurality of images of trays of different colours, textures, sizes, and shapes, wherein the plurality of images of the trays are of trays not containing produce;

validating the tray as valid using the image of the tray and a first pixel determination technique, wherein validating the tray using the image of the tray and the first pixel determination technique comprises marking the tray as a valid tray if a number of pixels occupied by the tray in the image of the tray is greater than a predetermined threshold value;

estimating a total area of the tray;

identifying one or more areas in the image of the tray in which the top surface of the bottom of the tray is exposed, wherein the identifying the top surface of the bottom of the tray is performed by a second deep learning model (275) trained using the plurality of images of areas exposed in trays having different colours, and textures; and

estimating the quantity of the produce in the tray, wherein estimating the quantity of the produce in the tray comprises:

estimating an area of the identified top surface of the bottom of the tray that is exposed;

subtracting the estimated area of the identified top surface of the bottom of the tray that is exposed from the total area of the tray to obtain an area of the tray covered by the produce; and

estimating the quantity of the produce in the tray as a percentage of the area of the tray covered by the produce and the total area of the tray.


**Patentansprüche**

1. Verfahren zum Schätzen einer Menge einer Ware in einem Ablagekasten, wobei das Verfahren Folgendes umfasst:

Empfangen, durch einen Prozessor (210), eines Bilds von einer Kamera (115), wobei das Bild ein Bild des Ablagekastens aufweist;

Identifizieren des Bilds des Ablagekastens in dem empfangenen Bild durch ein Ablagekastenbildidentifizierungsmodul (230) unter Verwendung eines ersten Deep-Learning-Modells (270), wobei das erste Deep-Learning-Modell (270) unter Verwendung einer Vielzahl von Bildern von Ablagekästen mit unterschiedlichen Farben, Texturen, Größen und Formen trainiert wird, wobei die Vielzahl von Bildern der Ablagekästen von Ablagekästen, die keine Ware enthalten, sind;

Validieren des Ablagekastens als gültig durch ein Ablagekastenvalidierungsmodul (235) unter Verwendung des Bilds des Ablagekastens und einer ersten Pixelbestimmungstechnik, wobei das Validieren des Ablagekastens unter Verwendung des Bilds des Ablagekastens und der ersten Pixelbestimmungstechnik Markieren des Ablagekastens als einen gültigen Ablagekasten umfasst, wenn eine Anzahl von Pixeln, die von dem Ablagekasten in dem Bild des Ablagekastens belegt werden, größer als ein vorgegebener Schwellenwert ist;

Schätzen, durch den Prozessor (210), einer Gesamtfläche des Ablagekastens;

Identifizieren, durch ein Leerstellendetektionsmodul (240), einer oder mehrerer Flächen in dem Bild des Ablagekastens, in dem die obere Oberfläche des Bodens des Ablagekastens freigelegt ist, wobei das Identifizieren der oberen Oberfläche des Bodens des Ablagekastens durch ein zweites Deep-Learning-Modell (275), das unter Verwendung einer Vielzahl von Bildern von in Ablagekästen mit unterschiedlichen Farben und Texturen freigelegten Flächen trainiert wird, durchgeführt wird; und

Schätzen, durch ein Leerstellenprozentwertberechnungsmodul (240), der Menge der Ware in dem Ablagekasten, wobei das Schätzen der Menge der Ware in dem Ablagekasten Folgendes umfasst:

Schätzen einer Fläche der identifizierten oberen Oberfläche des Bodens des Ablagekastens, die freigelegt ist;

Subtrahieren der geschätzten Fläche der identifizierten oberen Oberfläche des Bodens des Ablagekastens, die freigelegt ist, von der Gesamtfläche des Ablagekastens, um eine von der Ware bedeckte Fläche des Ablagekastens zu erhalten; und

Schätzen der Menge der Ware in dem Ablagekasten als einen Prozentwert der von der Ware bedeckten Fläche des Ablagekastens und der Gesamtfläche des Ablagekastens.

2. Verfahren nach Anspruch 1, das ferner Verarbeiten des empfangenen Bilds durch den Prozessor (210) umfasst, um Rauschen und Hindernisse in dem empfangenen Bild zu entfernen.

3. Verfahren nach Anspruch 1, wobei das Validieren des Ablagekastens unter Verwendung des Bilds des Ablagekastens und der ersten Pixelbestimmungstechnik ferner Folgendes umfasst:

Bestimmen der Anzahl von Pixeln, die von dem Ablagekasten in dem Bild des Ablagekastens belegt werden; und
Vergleichen der Anzahl von Pixeln mit dem vorgegebenen Schwellenwert.

4. Verfahren nach Anspruch 1, wobei das Schätzen der Gesamtfläche des Ablagekastens und das Schätzen der Fläche der identifizierten oberen Oberfläche des Bodens des Ablagekastens, die freigelegt ist, auf einer zweiten Pixelbestimmungstechnik basieren.

5. Verfahren nach Anspruch 4, wobei das auf der zweiten Pixelbestimmungstechnik basierende Schätzen der Gesamtfläche des Ablagekastens Folgendes umfasst:

Errechnen der Anzahl von Pixeln des Ablagekastens in dem Bild des Ablagekastens; und
Bestimmen der Gesamtfläche auf der Basis der Anzahl von Pixeln.

6. Verfahren nach Anspruch 4, wobei das auf der zweiten Pixelbestimmungstechnik basierende Schätzen der Fläche der identifizierten oberen Oberfläche des Bodens des Ablagekastens, die freigelegt ist, Folgendes umfasst:

Errechnen einer Anzahl von Pixeln, die von der oberen Oberfläche des Bodens des Ablagekastens, die freigelegt ist, belegt werden; und
Bestimmen der Fläche auf der Basis der Anzahl von Pixeln.

7. System (100) zum Schätzen einer Menge einer Ware in einem Ablagekasten, wobei das System (100) Folgendes umfasst:

eine Kamera (115), die zum Aufnehmen eines Bilds konfiguriert ist, wobei das Bild ein Bild des Ablagekastens aufweist; und
einen Verwaltungsserver (105), der einen Prozessor (210) und ein Speichermodul (215), das von dem Prozessor (210) auszuführende Anweisungen speichert, umfasst, wobei der Verwaltungsserver (105) zu Folgendem konfiguriert ist:

Empfangen des Bilds von der Kamera (115);
Identifizieren des Bilds des Ablagekastens in dem empfangenen Bild unter Verwendung eines ersten Deep-Learning-Modells (270), wobei das erste Deep-Learning-Modell (270) unter Verwendung einer Vielzahl von Bildern von Ablagekästen mit unterschiedlichen Farben, Texturen, Größen und Formen trainiert wird, wobei die Vielzahl von Bildern der Ablagekästen von Ablagekästen, die keine Ware enthalten, sind;
Validieren des Ablagekastens als gültig unter Verwendung des Bilds des Ablagekastens und einer ersten Pixelbestimmungstechnik, wobei das Validieren des Ablagekastens unter Verwendung des Bilds des Ablagekastens und der ersten Pixelbestimmungstechnik Markieren des Ablagekastens als einen gültigen Ablagekasten umfasst, wenn eine Anzahl von Pixeln, die von dem Ablagekasten in dem Bild des Ablagekastens belegt werden, größer als ein vorgegebener Schwellenwert ist;
Schätzen einer Gesamtfläche des Ablagekastens;
Identifizieren einer oder mehrerer Flächen in dem Bild des Ablagekastens, in dem die obere Oberfläche des Bodens des Ablagekastens freigelegt ist, wobei das Identifizieren der oberen Oberfläche des Bodens des Ablagekastens durch ein zweites Deep-Learning-Modell (275), das unter Verwendung der Vielzahl von Bildern von in Ablagekästen mit unterschiedlichen Farben und Texturen freigelegten Flächen trainiert wird, durchgeführt wird; und
Schätzen der Menge der Ware in dem Ablagekasten, wobei das Schätzen der Menge der Ware in dem Ablagekasten Folgendes umfasst:

Schätzen einer Fläche der identifizierten oberen Oberfläche des Bodens des Ablagekastens, die freigelegt ist;
Subtrahieren der geschätzten Fläche der identifizierten oberen Oberfläche des Bodens des Ablagekastens, die freigelegt ist, von der Gesamtfläche des Ablagekastens, um eine von der Ware bedeckte Fläche des Ablagekastens zu erhalten; und
Schätzen der Menge der Ware in dem Ablagekasten als einen Prozentwert der von der Ware bedeckten Fläche des Ablagekastens und der Gesamtfläche des Ablagekastens.

**Revendications**

1. Procédé d'estimation d'une quantité d'un produit dans un plateau, le procédé comprenant les étapes consistant à :

   recevoir, par un processeur (210), une image en provenance d'une caméra (115), l'image comportant une image du plateau ;

   identifier l'image du plateau dans l'image reçue, par un module d'identification d'image de plateau (230), au moyen d'un premier modèle d'apprentissage profond (270), le premier modèle d'apprentissage profond (270) étant formé au moyen d'une pluralité d'images de plateaux de différentes couleurs, textures, tailles et formes, la pluralité d'images des plateaux concernant des plateaux ne contenant pas de produit ;

   valider le plateau comme étant valide, par un module de validation de plateau (235), au moyen de l'image du plateau et d'une première technique de détermination de pixels, la validation du plateau au moyen de l'image du plateau et de la première technique de détermination de pixels comprenant le marquage du plateau comme étant un plateau valide si un nombre de pixels occupés par le plateau dans l'image du plateau est supérieur à une valeur seuil prédéterminée ;

   estimer, par le processeur (210), une aire totale du plateau ;

   identifier, par un module de détection d'écart (240), une ou plusieurs zones de l'image du plateau où la surface supérieure du fond du plateau est exposée, l'identification de la surface supérieure du fond du plateau étant réalisée par un second modèle d'apprentissage profond (275) formé au moyen d'une pluralité d'images de zones exposées dans des plateaux ayant différentes couleurs et textures ; et

   estimer, par un module de calcul de pourcentage d'écart (240), la quantité du produit dans le plateau, l'estimation de la quantité du produit dans le plateau comprenant les étapes consistant à :

   estimer une aire de la surface supérieure identifiée du fond du plateau qui est exposée ;

   soustraire l'aire estimée de la surface supérieure identifiée du fond du plateau qui est exposée de l'aire totale du plateau afin d'obtenir une aire du plateau recouverte par le produit ; et

   estimer la quantité du produit dans le plateau en pourcentage de l'aire du plateau recouverte par le produit et de l'aire totale du plateau.

2. Procédé selon la revendication 1, comprenant en outre l'étape consistant à traiter, par le processeur (210), l'image reçue afin d'éliminer le bruit et les obstructions dans l'image reçue.

3. Procédé selon la revendication 1, la validation du plateau au moyen de l'image du plateau et de la première technique de détermination de pixels comprenant en outre les étapes consistant à :

   déterminer le nombre de pixels occupés par le plateau dans l'image du plateau ; et

   comparer le nombre de pixels à la valeur seuil prédéterminée.

4. Procédé selon la revendication 1, l'estimation de l'aire totale du plateau et l'estimation de l'aire de la surface supérieure identifiée du fond du plateau qui est exposée étant basées sur une seconde technique de détermination de pixels.

5. Procédé selon la revendication 4, l'estimation de l'aire totale du plateau sur la base de la seconde technique de détermination de pixels comprenant les étapes consistant à :

   calculer le nombre de pixels du plateau dans l'image du plateau ; et

   déterminer l'aire totale sur la base du nombre de pixels.

6. Procédé selon la revendication 4, l'estimation de l'aire de la surface supérieure identifiée du fond du plateau qui est exposée, sur la base de la seconde technique de détermination de pixels, comprenant les étapes consistant à :

   calculer un nombre de pixels occupés par la surface supérieure du fond du plateau qui est exposée ; et

   déterminer l'aire sur la base du nombre de pixels.

7. Système (100) d'estimation d'une quantité d'un produit dans un plateau, le système (100) comprenant :

   une caméra (115) configurée pour capturer une image, l'image comportant une image du plateau ; et

   un serveur de gestion (105) comprenant un processeur (210) et un module de mémoire (215) stockant des instructions que doit exécuter le processeur (210), le serveur de gestion (105) étant configuré pour :

recevoir l'image en provenance de la caméra (115) ;

identifier l'image du plateau dans l'image reçue au moyen d'un premier modèle d'apprentissage profond (270), le premier modèle d'apprentissage profond (270) étant formé au moyen d'une pluralité d'images de plateaux de différentes couleurs, textures, tailles et formes, la pluralité d'images des plateaux concernant des plateaux ne contenant pas de produit ;

valider le plateau comme étant valide au moyen de l'image du plateau et d'une première technique de détermination de pixels, la validation du plateau au moyen de l'image du plateau et de la première technique de détermination de pixels comprenant le marquage du plateau comme étant un plateau valide si un nombre de pixels occupés par le plateau dans l'image du plateau est supérieur à une valeur seuil prédéterminée ;

estimer une aire totale du plateau ;

identifier une ou plusieurs zones de l'image du plateau où la surface supérieure du fond du plateau est exposée, l'identification de la surface supérieure du fond du plateau étant réalisée par un second modèle d'apprentissage profond (275) formé au moyen de la pluralité d'images de zones exposées dans des plateaux ayant différentes couleurs et textures ; et

estimer la quantité du produit dans le plateau, l'estimation de la quantité du produit dans le plateau comprenant :

l'estimation d'une aire de la surface supérieure identifiée du fond du plateau qui est exposée ;

la soustraction de l'aire estimée de la surface supérieure identifiée du fond du plateau qui est exposée de l'aire totale du plateau afin d'obtenir une aire du plateau recouverte par le produit ; et

l'estimation de la quantité du produit dans le plateau en pourcentage de l'aire du plateau recouverte par le produit et de l'aire totale du plateau.

**100**

**120**

**105**

Communication
Network **125**

**110**

**115**

**115-1**   **115-2**   **115-N**

FIGURE 1

105

| Network Interface Module 205 | Processor(s) 210 | Memory Module 215 |

| Image Processing Module 220 | Obstruction Detection Module 225 | Tray Image Identification Module 230 |

| Second Deep Learning Model 275 | First Deep Learning Model 270 |

| Tray Validation Module 235 | Gap Detection Module 240 | Gap Validation Module 245 |

| Gap Percentage Calculation Module 250 |

FIGURE 2

FIGURE 3A

FIGURE 3B

FIGURE 4A

405　　　　410　　　415

FIGURE 4B

FIGURE 5

605

Data Collection &
Labelling Module

610

Deep Learning Stack

Obstruction Model

Tray Detection
Model

Gap Detection
Model

640

Image
Processing/Hyperpar
ameter Tuning

615

Model
Evaluation &
Tuning

No          635          Yes

Is the failed
data is a new
type of shelf?

Achieved desired model performance

620

Product Deployment &
Monitoring

Reiterate to
achieve desired
result

625

Fail case
analysis
module

630

Fail case
identified?

Yes

No

End

FIGURE 6

**EP 4 195 167 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021027485 A1

**Non-patent literature cited in the description**

- Determining on-shelf availability based on RGB and ToF depth cameras. 2021 23RD INTERNATIONAL CONFERENCE ON CONTROL SYSTEMS AND COMPUTER SCIENCE (CSCS). IEEE, 26 May 2021, 243-248